Europäisches Patentamt

European Patent Office

Office européen des brevets

(19)

(11) Numéro de publication : **0 054 335 B1**

(12) # FASCICULE DE BREVET EUROPÉEN

(45) Date de publication du fascicule du brevet :
16.04.86

(51) Int. Cl.⁴ : **G 01 S 13/34**

(21) Numéro de dépôt : **81201364.7**

(22) Date de dépôt : **11.12.81**

(54) **Procédé de mesure de distance par radar à onde entretenue modulée en fréquence, appareil pour la mise en oeuvre du procédé et application à la détermination précise du niveau de liquide dans un réservoir.**

(30) Priorité : **12.12.80 FR 8026438**

(43) Date de publication de la demande :
**23.06.82 Bulletin 82/25**

(45) Mention de la délivrance du brevet :
**16.04.86 Bulletin 86/16**

(84) Etats contractants désignés :
**DE FR GB**

(56) Documents cités :
**DE-A- 2 438 116**
**FR-A- 1 557 670**
**FR-A- 2 425 764**
**CONFERENCE PROCEEDINGS: "5th European Micro-wave Conference" 1-4 septembre 1975, Hamburg Sevenoaks, Kent, GB R. JACOBSON et al.: "Micro-wave Distance Meter with +- 2,5mm Resolution", pages 203-207**

(73) Titulaire : **TELECOMMUNICATIONS RADIOELECTRI-QUES ET TELEPHONIQUES T.R.T.**
**88, rue Brillat Savarin**
**F-75013 Paris (FR)**
**FR**
**N.V. Philips' Gloeilampenfabrieken**
**Groenewoudseweg 1**
**NL-5621 BA Eindhoven (NL)**
**DE GB**

(72) Inventeur : **Tomasi, Jean Pierre**
**SOCIETE CIVILE S.P.I.D. 209 rue de l'Université**
**F-75007 Paris (FR)**

(74) Mandataire : **Pyronnet, Jacques et al**
**Société Civile S.P.I.D. 209 rue de l'Université**
**F-75007 Paris (FR)**

## Description

L'invention concerne un procédé pour la détermination précise de la distance d d'un objet par rapport et à l'aide d'un radar du type FM-CW comportant un générateur VCO d'un signal hyperfréquence F de fréquence instantanée f modulé linéairement en fréquence par un modulateur GDS engendrant un signal de tension en dents de scie DDS présentant chacune une rampe de durée T pendant laquelle le signal F décrit une excursion linéaire de fréquence de valeur $\Delta F$ prédéterminée, constante, et connue avec précision, une antenne émettrice-réceptrice et un mélangeur qui reçoit le signal émis, et le signal reçu F' de fréquence instantanée f' après réflexion sur l'objet dont on veut mesurer l'éloignement d, et qui délivre un signal Fb de fréquence $f_b$.

Selon un mode de réalisation de l'invention, la durée T de chaque dent de scie de tension (sortie de GDS) et de fréquence (sortie de VCO) est prédéterminée, constante et connue avec précision.

Selon un autre mode de réalisation, ledit radar de type FM-CW comporte une boucle d'asservissement entre la sortie dudit mélangeur et l'entrée dudit modulateur GDS pour maintenir sensiblement constante la fréquence $f_b$ du signal Fb de sortie du mélangeur.

L'invention concerne aussi un appareil de mesure de distance pour la mise en œuvre du procédé couvrant les modes de réalisation décrits ci-dessus.

Dans le cas où le radar comporte une boucle d'asservissement, il est par exemple tel que décrit dans le brevet français n° 1 557 670 au nom de la demanderesse.

L'invention s'applique de préférence à la mesure de distances relativement courtes. La valeur des paramètres $f_1$ (fréquence centrale du signal F) et $\Delta F$ du radar étant supposée fixée, on peut définir une petite plage de distances maximales, soit de do à 1,1 do pour fixer les idées, pour laquelle la précision obtenue sur d est sensiblement la même que celle avec laquelle il est possible de mesurer f, soit $10^{-4}$ par exemple. Au-delà de cette plage l'invention n'est plus applicable et la précision sur d retombe à $10^{-3}$ et plus ; pour des valeurs de distances inférieures à do, l'erreur absolue commise sur d reste constante, c'est-à-dire que l'erreur relative augmente lorsque d diminue, devenant égale par exemple à $10^{-3}$ pour d = 0,1 do. L'invention se révèle donc avantageuse sur une plage de distances couvrant environ un ordre de grandeur de 1 à 10 mètres, ou de 10 à 100 mètres par exemple.

Plus précisément l'invention peut s'appliquer à la mesure de la hauteur d'un liquide, de l'hydrogène ou de l'oxygène liquide par exemple dans des réservoirs ayant une hauteur de quelques mètres avec une erreur absolue environ égale à 1 mm.

L'équation de base à partir de laquelle la distance peut être mesurée lorsqu'on utilise un radar FM-CW du type décrit ci-dessus utilisé généralement comme radioaltimètre s'écrit :

$$\frac{f_b}{\tau} = \frac{\Delta F}{T} \qquad (1)$$

formule dans laquelle $\tau$ est le temps mis par l'onde pour parcourir la distance 2d entre le radar et l'objet et retour au radar après réflexion sur l'objet, soit :

$$\tau = \frac{2\,d}{c} \qquad (2)$$

c étant la vitesse de propagation de l'onde électromagnétique.

Des formules (1) et (2), on déduit la valeur de d en fonction des valeurs mesurées de $f_b$, $\Delta F$ et T :

$$d = \frac{cf_b}{2\,\Delta F}\,T\,. \qquad (3)$$

Cette dernière formule est utilisée par exemple dans la demande de brevet allemand, première publication 2 438 116, dans laquelle on indique une façon de mesurer la fréquence de battement intermédiaire avec une certaine précision pour obtenir une valeur relativement précise de la distance.

Lorsque l'appareil de mesure de distance est celui décrit dans le brevet français n° 1 557 670, les paramètres $f_b$ et $\Delta F$ sont maintenus à des valeurs sensiblement constantes et la distance d est proportionnelle à la durée T d'une dent de scie. La précision obtenue sur d est alors égale en première approximation à la somme des précisions obtenues sur $f_b$, $\Delta F$ et T, soit une erreur de l'ordre de $\Delta d/d = 10^{-2}$ lorsque les erreurs relatives sur $f_b$, $\Delta F$ et T sont de l'ordre de $10^{-3}$, ce qui est déjà difficile à obtenir dans la technique connue. Il est aussi envisageable d'émettre une onde variant linéairement en fréquence sous forme de dents de scie ayant une excursion de fréquence $\Delta F$ et une durée T maintenues constantes. Dans ce dernier cas, $\Delta F$ et T deviennent des paramètres, et $f_b$ la variable en fonction de la distance d, dans la formule (3), le raisonnement fait sur la précision de d restant le même que décrit ci-

2

dessus dans le cas où T est la variable. Il faut noter que dans les deux cas envisagés ci-dessus (T variable ou $f_b$ variable en fonction de d) la valeur de $f_b$, pendant le temps T d'excursion d'une dent de scie, peut être considérée comme constante, sa variation étant de plusieurs ordres de grandeur plus faible que les erreurs les plus faibles considérées dans le présent texte. Ceci résulte du fait que la vitesse relative entre objet et radar, pour les applications envisagées, est très faible en comparaison de la vitesse de répétition des dents de scie.

Un but de la présente invention est d'obtenir une meilleure précision sur la mesure de $f_b$, $\Delta F$ et T notamment par l'utilisation de périodemètres ou d'oscillateurs à quartz.

Un autre but de l'invention est d'obtenir sur d une précision qui est du même ordre que celle obtenue pour $f_b$, $\Delta F$ et T respectivement. Ces buts sont atteints du fait que le procédé décrit en préambule est remarquable en ce qu'il comporte les étapes suivantes pendant la durée T d'une dent de scie :

a) La mesure précise de la fréquence $f_0$ du signal F à un instant $t_0$ par l'utilisation d'une boucle de phase comportant deux oscillateurs à quartz et des moyens de commutation et de verrouillage, et de la phase $\varphi_{bo}$ selon la formule :

$$\varphi_{bo} = \frac{(2\,\pi\theta_2 - 2\,\theta_1)}{\theta_2 - \theta_1},$$

les durées $\theta_1$ et $\theta_2$ étant déterminées par comptage au moyen de compteurs rapides, $\theta_1$ et $\theta_2$ marquant respectivement la fin de la première et de la deuxième sinusoïde du signal Fb avec, pour origine, l'instant $t_0$.

b) La détermination d'un train de N périodes (N entier) du signal Fb dont on mesure la valeur N et la durée $T_1$ comprise dans la durée T.

c) Le calcul d'une valeur relativement précise de d, notée $d_1$, à partir des valeurs $\Delta F$, T et des valeurs trouvées pour N et $T_1$ à l'étape précédente.

d) Le calcul approché de $\varphi$, noté $\varphi_1$, qui est le déphasage global entre signaux émis et reçu à partir des valeurs de $f_0$ et $d_1$ trouvées aux étapes précédentes.

e) La détermination de l'angle 2 kII, réellement contenu dans l'angle $\varphi$, k étant la partie entière de la valeur :

$$\frac{f_0}{\Delta F}\,\frac{NT}{T_1} - \frac{\varphi_{bo}}{2\,\pi}$$

moyennant que la précision de mesure exprimée en radians de l'angle électrique que représentent les N périodes du signal Fb soit inférieure à :

$$\pi\,\frac{T_1}{T}\,\frac{\Delta F}{f_0}\,.$$

f) L'identification de la valeur précise de $\varphi$, notée $\varphi_2$ à la somme : $\varphi_{bo} + 2$ kII.

g) Le calcul de la valeur précise de d, notée $d_2$, à partir des valeurs de $f_0$ et de $\varphi_2$ trouvées aux étapes précédentes.

Lorsque le radar utilisé est du type décrit dans le troisième paragraphe de la description, le procédé selon l'invention est remarquable en ce qu'il comporte l'étape supplémentaire qui consiste en la mesure précise de la durée T de la dent de scie considérée.

Selon l'invention, un appareil de mesure de distance pour la mise en œuvre du procédé indiqué plus haut et comportant en outre des premiers moyens de mise en forme dudit signal Fb sous forme d'un signal carré A ayant même phase et même fréquence $f_b$ est remarquable en ce qu'il comporte aussi :

— des deuxièmes moyens de mesure pour la détermination de la phase $\varphi_{bo}$ du signal carré à fréquence $f_b$ à l'instant marquant le début de la durée T où la fréquence f du signal F est égale à une valeur prédéterminée précise $f_p$ (f/o = f/p), comportant d'une part une boucle de phase munie de deux oscillateurs à quartz et des moyens de commutation et de verrouillage pour engendrer ladite valeur de fréquence $f_p$, d'autre part des compteurs rapides pour mesurer les durées $\theta_1$ et $\theta_2$ qui marquent respectivement la fin de la première et de la deuxième sinusoïde du signal Fb avec, pour origine, ledit instant marquant le début de la durée T ;

— des troisièmes moyens de mesure pour la détermination de la fréquence $f_b$ à partir d'un train de signaux carrés appartenant au signal A et dont le nombre de périodes N (N entier, arbitraire) et la durée $T_1$ comprise dans la durée T peuvent être mesurés avec précision, lesdits troisièmes moyens comportant à cet effet un circuit à seuil qui reçoit le signal DDS et un signal de tension de seuil S, des circuits logiques tels qu'une bascule bistable qui reçoit le signal A et des circuits-portes logiques, et des compteurs ;

— des quatrièmes moyens de calcul et d'affichage pour la détermination de la distance précise $d_2$ à partir des valeurs des paramètres $\Delta F$, $\theta_1$, $\theta_2$, $f_p$, N, $T_1$ et T mesurés pendant une (chaque) rampe de dent de scie, par utilisation des formules suivantes :

# 0 054 335

$$d_1 = \frac{cNT}{2 \, \Delta F T_1}; \quad \varphi_{b0} = 2\,\pi \frac{\theta_2 - 2\,\theta_1}{\theta_2 - \theta_1};$$

k = partie entière de

$$\frac{2\,f_p\,d_1}{c} - \frac{\varphi_{b0}}{2\,\pi}; \quad d_2 = \frac{c}{4\,\pi f_p}(\varphi_{b0} + 2\,k\pi)$$

$d_1$ étant une valeur de la distance relativement précise et les valeurs de $T_1$, T, $\Delta F$ et f étant telles que la précision de mesure exprimée en radians de l'angle électrique que représentent les N périodes du signal Fb soit inférieure à :

$$\pi \frac{T_1}{T} \frac{\Delta F}{f_p}.$$

L'idée de base de l'invention est d'effectuer une première mesure relativement précise de d notée $d_1$ à partir de la formule (3) avec une erreur absolue inférieure à une demi longueur d'onde du signal émis (soit une erreur relative sur $d_1$ au mieux égale à $10^{-3}$). Ceci permet, grâce à une mesure de phase à 10 degrés près du signal Fb, et à l'utilisation d'autres formules indiquées ci-dessous dans lesquelles $d_1$ intervient, d'obtenir après mesure et calcul la valeur d'un angle électrique de déphasage pouvant atteindre plusieurs milliers de degrés avec une précision de l'ordre de $10^{-4}$, et de calculer d à partir de la valeur de cet angle et d'une valeur particulière de la fréquence f mesurée avec une précision de l'ordre de $10^{-5}$. Cette deuxième valeur très précise de d, notée $d_2$ est obtenue avec une précision d'environ $10^{-4}$, la précision obtenue sur $f_b$, $\Delta F$ et T étant aussi d'environ $10^{-4}$.

La description suivante en regard des dessins annexés, le tout donné à titre d'exemple, fera bien comprendre comment l'invention peut être réalisée.

La figure 1 est un schéma synoptique simplifié de deux modes de réalisation possibles de l'invention.

La figure 2 est un schéma synoptique de l'appareil de mesure de distance pour la mise en œuvre du procédé selon l'invention.

La figure 3 représente des diagrammes de temps de certains signaux du schéma de la figure 2 qui explicitent la mesure de $f_b$ et T.

Les figures 4a et 4b représentent des diagrammes de temps explicitant la mesure de phase $\varphi_{b0}$ grâce à l'appareil de la figure 2.

La figure 5 est le schéma synoptique d'un radar FM-CW comportant une boucle d'asservissement pour maintenir constante la fréquence $f_b$ ainsi qu'une boucle de phase permettant d'obtenir une valeur $\Delta F$ et une valeur de fréquence centrale $f_1$ du signal F, constantes avec la précision d'un quartz.

La figure 6 représente en coupe longitudinale avec arrachement l'application de l'invention a un dispositif pour la mesure précise de la hauteur de liquide dans un réservoir.

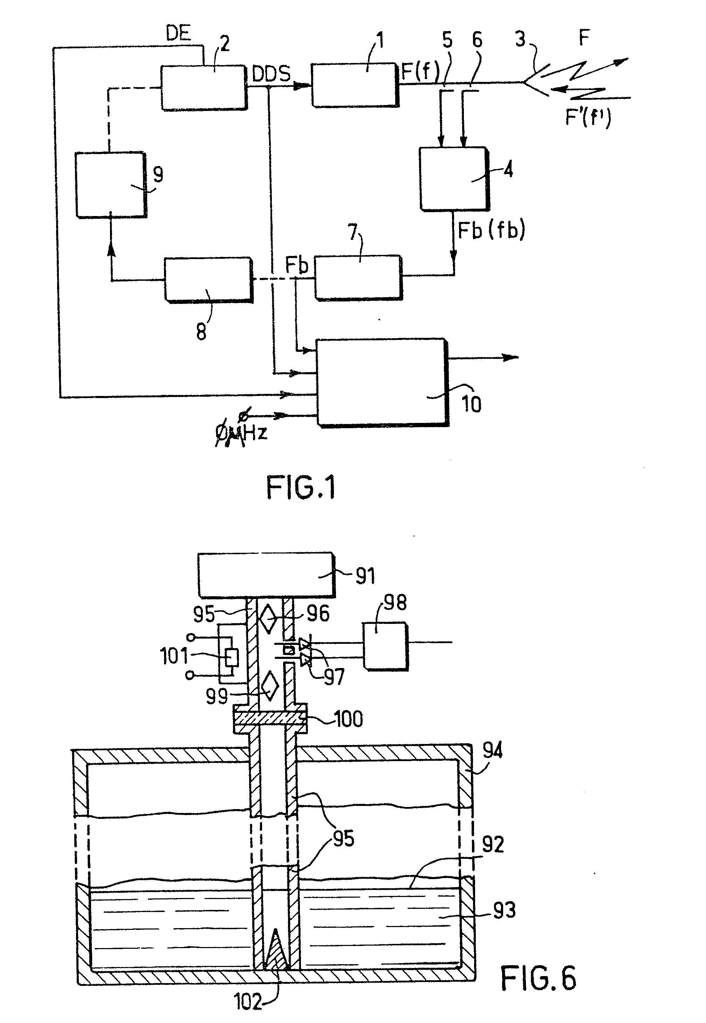

Sur la figure 1 est représenté en 1 un oscillateur commandé par tension VCO dont l'entrée est reliée à la sortie d'un générateur de tension en dents de scie 2, appelé en abrégé GDS. Le VCO engendre un signal hyperfréquence F de fréquence f, par exemple centimétrique ou décimétrique, qui est fourni à une antenne émettrice-réceptrice 3. Une fraction du signal émis est transmise à un mélangeur 4 par l'intermédiaire d'un coupleur 5. Après réflexion sur un objet non représenté dont on veut mesurer la distance d par rapport à l'antenne 3, une fraction du signal émis est reçue, après un retard $\tau$ mis pour parcourir deux fois la distance d, par l'antenne 3 (signal F' de fréquence f') et partiellement transmise à une deuxième entrée du mélangeur 4 par l'intermédiaire d'un coupleur 6. Le mélangeur 4 effectue un mélange soustractif des signaux qu'il reçoit et délivre à sa sortie un signal de battement dont la fréquence $f_b$ est telle que : $f_b = f - f'$. Ce signal est filtré et amplifié à travers l'amplificateur-filtre 7 qui délivre le signal Fb de fréquence $f_b$. Les éléments 1 à 7 constituent la partie connue classique d'un radar FM-CW à modulation linéaire de fréquence. Le générateur 2 peut être autonome et engendrer un signal de tension en dents de scie dont l'excursion linéaire $\Delta V$ et la durée T correspondant à cette excursion sont constantes. Les dents de scie sont par exemple asymétriques, croissantes et séparées par des paliers de tension basse $V_1$ et haute $V_2$. A ce signal correspond un signal F en sortie du VCO 1 constitué par des dents de scie de fréquence croissante d'excursion $\Delta F$ constante, de durée T et séparées par des paliers de fréquence basse $f_p$ constrante et haute $f_2$ constante tels que $\Delta F = f_2 - f_p$.

De préférence, le radar comporte entre la sortie du mélangeur 4 et une entrée de commande du GDS 2 une boucle d'asservissement qui a pour fonction de maintenir constante la fréquence $f_b$ en faisant varier la pente des dents de scie lorsque la distance d varie. Cette boucle signalée par un trait interrompu sur la figure 1 comporte l'amplificateur-filtre 7, un discriminateur de fréquence 8 de fréquence centrale $f_{b0}$ constante, et un intégrateur-anamorphoseur 9. Lorsque la distance d varie, la fréquence $f_b$ est maintenue sensiblement égale à $f_{b0}$ et la pente des dents der scie varie, $\Delta F$ restant constante, de façon telle que la durée T soit proportionnelle à la distance d en première approximation. Pour plus de détails sur la structure et le fonctionnement de ce radar, on peut se reporter au brevet français déjà cité n° 1 557 670. Pour la mise en œuvre de l'invention, le radar de la figure 1 met de façon connue à disposition, par l'intermédiaire du GDS, un signal logique DE qui est égal à « 1 » pendant l'excursion de la dent de scie et à « 0 » pendant les paliers. Les signaux Fb, DDS et DE sont transmis à un organe de mesure et de calcul 10 qui peut être réalisé en logique câblée, mais qui est de préférence un microprocesseur et qui reçoit aussi un signal d'horloge rapide à fréquence par exemple égale à 10 MHz, noté $\emptyset$.

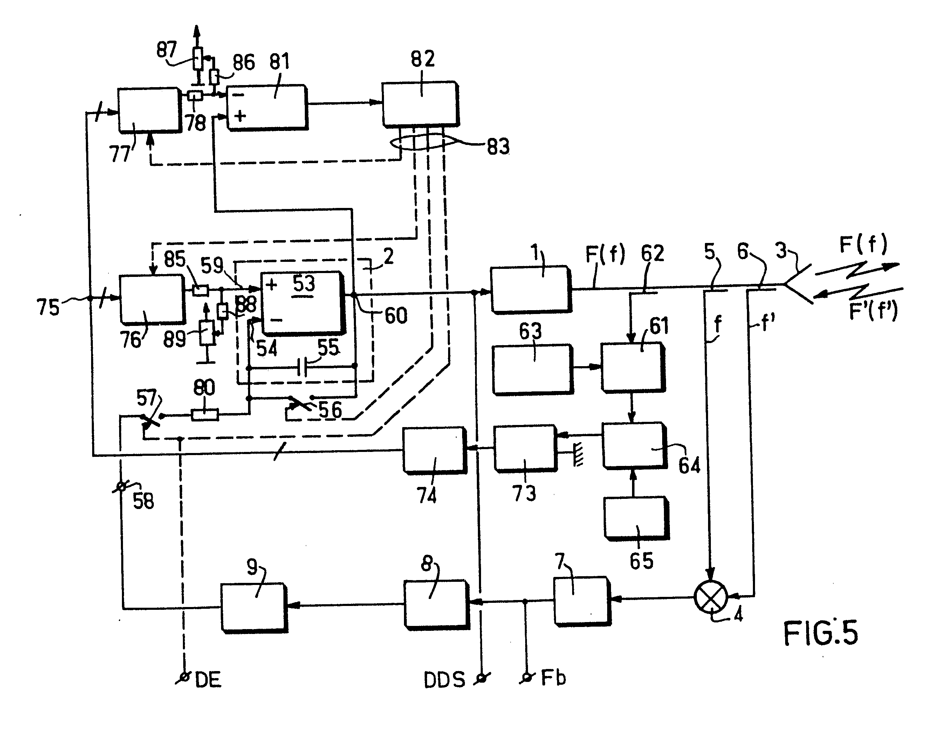

Partant de la formule (3), l'invention se propose dans un premier stade d'obtenir les valeurs des paramètres $f_b$, $\Delta F$ et $T$ avec une précision améliorée, cette précision devant être sensiblement la même pour chacun des trois paramètres. Il est connu d'obtenir la mesure de $T$ avec une grande précision par utilisation d'un compteur numérique rapide qui reçoit l'horloge $\emptyset$ et le signal DE comme décrit ci-dessous. La précision sur $T$ étant par exemple de l'ordre de $10^{-4}$, l'invention se propose de mesurer $\Delta F$ et $f_b$ avec une précision comparable. En ce qui concerne $\Delta F$, la valeur qui serait mesurée à partir du signal DDS en appliquant la formule $\Delta F = f_2 - f_p$ étant insuffisante, il est nécessaire d'adjoindre au radar un dispositif de régulation du $\Delta F$ à une valeur prédéterminée à l'aide d'oscillateurs à quartz, comme décrit ci-dessous en référence à la figure 5. $\Delta F$ est alors introduit comme une constante extérieure dans l'organe 10. La mesure précise de $f_b$ se fait à partir du signal Fb par comptage d'un nombre entier $N$ de sinusoïdes du signal Fb formant un train à l'intérieur de la durée $T$, et mesure concomittante de la durée $T_1$ de ce train qui peut être faite avec la même précision que $T$. La précision obtenue est d'autant plus grande que $T_1$ est grand et dans la plupart des cas, il est possible de faire en sorte que $T_1$ soit environ égal à 0,9 T. On obtient alors à partir de la formule (3) la valeur relativement précise de $d$, notée $d_1$, qui s'écrit :

$$d_1 = \frac{cNT}{2 \, \Delta F \, T_1} \tag{4}$$

avec

$$f_b = \frac{N}{T_1} . \tag{5}$$

L'invention se propose, en liaison avec ce qui précède, à partir d'une mesure de phase $\varphi_{bo}$ du signal Fb, d'une mesure de fréquence $f_0$ du signal F, ces deux mesures étant faites à un même instant $t_0$ choisi arbitrairement pendant la durée $T$ et de la valeur $d_1$, de déterminer la distance $d$, notée $d_2$, avec une précision plusieurs fois plus grande que celle obtenue sur $d_1$ au moins sur une certaine plage de distances. Avantageusement, l'instant $t_0$ marque le début de la durée $T$, instant auquel la fréquence du signal F est égale à la fréquence $f_p$ prédéterminée du palier bas ($f_0 = f_p$) et peut être connue avec précision, étant obtenue à partir d'oscillateurs à quartz comme décrit ci-dessous en référence à la figure 5.

Les formules et les calculs qui permettent d'obtenir $d_2$ sont comme suit :

$$\varphi = 2 \, \pi f_0 \, \tau = 4 \, \pi f_0 \, \frac{d_1}{c} \tag{6}$$

$\varphi$ étant l'angle, pouvant comporter plusieurs cycles, qui représentent avec une très bonne approximation le déphasage global entre les signaux F et F' à l'instant $t_0$, en prenant comme origine le point d'intersection entre la droite d'équation $f(t) = (\Delta F/T) \, t$ et l'axe des temps. Ce déphasage global représente l'angle électrique parcouru par le signal F pendant le temps $\tau$. La formule (6) donne $\varphi$ en première approximation seulement, du fait de l'hypothèse simplificatrice implicite selon laquelle la fréquence $f$ resterait constante et égale à $f_0$ pendant la durée $\tau$ qui précède l'instant $t_0$. L'erreur ainsi introduite sur $\varphi$ est cependant très faible, par exemple de l'ordre de $10^{-8}$ seulement si l'on choisit pour $f$ une fréquence de l'ordre de 10 GHz et pour $f_b$ une fréquence de l'ordre de 100 Hz, et peut être négligée. L'angle $\varphi$ peut encore s'écrire :

$$\varphi = \varphi_{bo} + 2 \, k\pi \tag{7}$$

$\varphi_{bo}$ étant la phase du signal Fb à l'instant $t_0$ et $k$ un nombre entier. En combinant les équations (6) et (7) on obtient :

$$d_2 = \frac{c}{4 \, \pi f_0} \, (\varphi_{bo} + 2 \, k\pi) \tag{8}$$

soit, en introduisant dans la formule (8) la valeur $d_1$ de $d$ :

$$k = \frac{2 \, f_0 \, d_1}{c} - \frac{\varphi_{bo}}{2 \, \pi} . \tag{9}$$

5

Si les valeurs de $f_o$, $d_1$, $\varphi_{bo}$ étaient les valeurs exactes, on obtiendrait pour k la valeur entière recherchée ; $f_o$, $d_1$ et $\varphi_{bo}$ étant des valeurs obtenues à partir de mesures, on obtient en fait d'après la formule (9) à la place de k, une valeur k' non entière, voisine de k. Le but de l'invention est que ces mesures soient assez précises pour que l'on obtienne pour k' une valeur non entière de k, telle que :

$$k - \frac{1}{2} < k' < k + \frac{1}{2}. \tag{10}$$

Les contraintes à respecter pour que la condition (10) soit remplie sont décrites plus loin.

Il devient ainsi possible de déterminer la valeur de k à partir de celle de k', ce qui permet d'utiliser la formule (8) pour la mesure de d avec une grande précision. En effet, l'erreur absolue sur $\varphi$ est alors la même que celle sur $\varphi_{bo}$, soit par exemple $\pm 10$ degrés. Par contre, l'erreur relative sur $\varphi$ est, dans l'hypothèse où $f_o = 10$ GHz et où $d = 10$ m, en vertu de la formule (6) de l'ordre de $4 \cdot 10^{-5}$. La valeur de $f_o$ étant obtenue avec la précision d'un oscillateur à quartz et par exemple de l'ordre de $10^{-5}$, la précision obtenue sur d, noté $d_2$ est de l'ordre de $5 \cdot 10^{-5}$. Il faut noter que si l'erreur absolue sur $\varphi_{bo}$ était cinq fois plus faible, l'erreur relative sur $d_2$ serait aussi environ cinq fois plus faible, soit de l'ordre de $10^{-5}$.

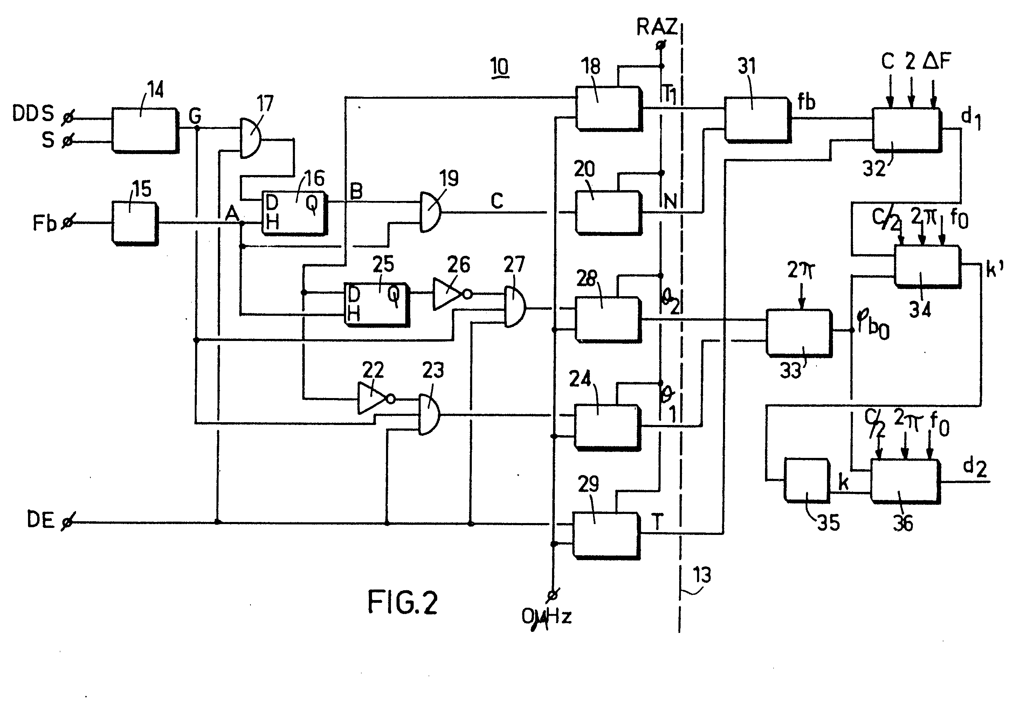

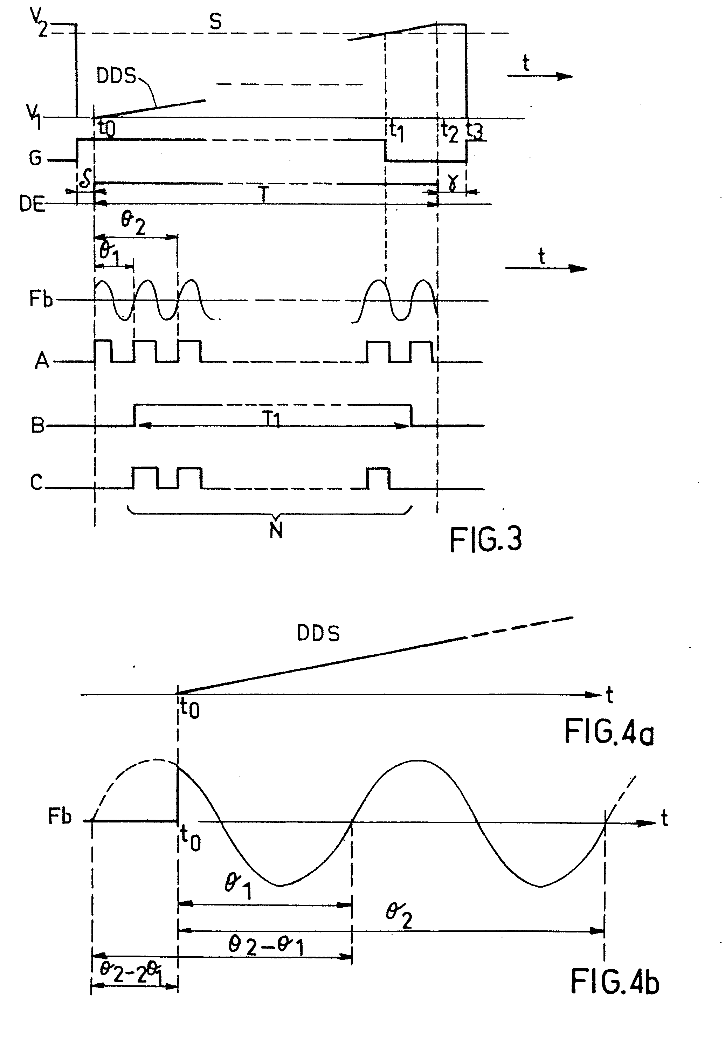

Les figures 2 et 3 illustrent un mode de réalisation de l'invention, permettant la mesure de certains paramètres et la détermination de la distance $d_2$ à partir des signaux DDS, Fb, DE indiqués à la figure 1 et d'un signal de seuil S d'une part et des valeurs de $\Delta F$ et $f_o$ ($f_o = f_p$) introduites comme des constantes.

La figure 2 représente l'organe 10 de la figure 1. Sur la partie de la figure 2 située à gauche d'un trait interrompu 13 est représentée la partie de mesure de l'organe 10, et à droite de la ligne 13 la partie de calcul, avantageusement un microprocesseur.

La figure 3 représente des diagrammes de temps de certains signaux reçus ou engendrés par la partie de mesure de l'organe 10. Un circuit à seuil 14 (figure 2) reçoit le signal DDS qui se présente par exemple sous la forme d'une rampe de tension croissante, répétitive, limitée par deux paliers, un palier bas de valeur $V_1$ constante et un palier haut de valeur $V_2$ constante. Un signal de tension continue S légèrement inférieure à $V_2$ est aussi fourni au circuit 14 qui, de façon connue délivre un signal de tension logique G, égal à « 1 » lorsque la tension de DDS est inférieure à la tension de S et à « 0 » dans le cas contraire. D'autre part, le signal sinusoïdal Fb est transformé, dans un circuit de mise en forme 15 en un signal carré A ayant même fréquence et même phase. Le signal DE engendré par le GDS 2 (figure 1) est égal à « 1 » pendant la rampe de tension de DDS comprise entre $V_1$ et $V_2$, et à « 0 » ailleurs. Une bascule bistable, en l'occurrence une bascule D 16 reçoit sur son entrée D un signal logique issu d'un circuit-porte logique ET 17 dont les deux entrées reçoivent le signal G et le signal DE. La bascule 16 reçoit sur son entrée d'horloge le signal A et délivre à sa sortie Q un signal B qui est à l'état logique « 1 » entre deux fronts montants du signal A, pendant la durée $T_1$. Le temps $T_1$ est mesuré à l'aide d'un compteur rapide 18 qui reçoit le signal d'horloge $\emptyset$ et sa valeur est transmise à la partie de calcul sous forme série ou parallèle. Pour le calcul du nombre N, les signaux A et B sont transmis à un circuit-porte ET 19 qui délivre un train de N impulsions à l'entrée d'un compteur 20. Après mise en forme en 20 les N impulsions sont transmises sous forme série ou parallèle à la partie de calcul.

La mesure de déphasage $\varphi_{bo}$ s'effectue comme décrit ci-dessous en référence à la figure 4. Les figures 4a et 4b représentent à plus grande échelle les signaux DDS et Fb de la figure 3. L'instant choisi pour la mesure de $\varphi_{bo}$ est l'instant $t_o$ auquel la rampe de tension a la valeur $V_1$, et le signal F la valeur prédéterminée $f_p = f_o$.

Soit $\theta_1$ le temps qui, à partir de $t_o$, s'écoule jusqu'au premier passage à 0 par valeurs croissantes du signal Fb (premier front montant de A) et $\theta_2$ le temps qui s'écoule jusqu'au deuxième front montant de A. La période de Fb est égale à $\theta_2 - \theta_1$ et le temps qui mesure le déphasage $\varphi_{bo}$ à $\theta_2 - 2\theta_1$. Il s'ensuit que le déphasage $\varphi_{bo}$ est égal à :

$$\varphi_{b0} = 2\pi \frac{(\theta_2 - 2\theta_1)}{\theta_2 - \theta_1}; \tag{11}$$

Pour engendrer un signal logique égal à « 1 » uniquement pendant la durée $\theta_1$, le signal B inversé par un circuit inverseur 22, le signal G et le signal DE sont transmis à un circuit-porte ET 23 dont le signal de sortie est fourni à un compteur rapide 24 qui effectue la mesure de $\theta_1$ comme le compteur 18 celle de $T_1$. La durée $\theta_2$ est engendrée de façon semblable. Une bascule D 25 qui reçoit le signal B sur son entrée D et le signal A sur son entrée d'horloge délivre un signal dont le premier front montant coïncide avec la fin de la durée $\theta_2$. Ce signal est inversé par un circuit inverseur 26 et transmis, ainsi que les signaux G et DE à un circuit-porte ET 27 dont la sortie est à l'état logique « 1 » pendant $\theta_2$. Comme les durées $T_1$ et $\theta_1$, $\theta_2$ est mesurée par un compteur rapide 28. De même, la durée T est mesurée, si besoin est, par un compteur rapide 29 semblable aux compteurs 18, 24 et 28. On peut aussi choisir comme instant de mesure de $\varphi_{bo}$ et de $f_o$ un instant où le signal Fb passe par « 0 » par valeurs croissantes, l'instant de n'importe quel front montant du signal A. Dans ce cas, $\varphi_{bo}$ qui est nul du fait de ce choix n'a pas besoin d'être mesuré. Par contre, la valeur $f_o$ de f, différente de $f_p$ doit alors être mesurée audit instant par un périodemètre à quartz.

La remise à zéro des compteurs 18, 20, 24, 28, 29 est effectuée par un signal RAZ qui peut être engendré de façon connue par le radar à n'importe quel instant compris entre les instants $t_2$ marquant la fin de la rampe de tension du signal DDS et $t_o$ marquant le début de la rampe suivante. De préférence, on choisit pour la remise à zéro l'instant $t_3$ qui est celui du passage de la valeur maximale à la valeur minimale du signal DDS (passage de $V_2$ à $V_1$ lorsque le signal DDS comporte des paliers).

Lorsque la partie droite de la figure 2 est un microprocesseur, les valeurs de $T_1$, N, $\theta_2$, $\theta_1$ et T sont transmises à des circuits d'interface (ports d'entrée-sortie) et le microprocesseur est programmé de façon connue pour exploiter ces nombres traduits en parallèle sur le bus de données selon la séquence suivante :

— calcul de la fréquence $f_b$ selon la formule (5) symbolisé en 31, figure 2 ;

— calcul de la distance $d_1$ selon la formule (4) symbolisé par le bloc 32 qui reçoit en plus des données variables $f_b$ et T les constantes c, 2 et la valeur de $\Delta F$ introduite comme une constante, ces valeurs étant contenues dans une mémoire morte (ROM). Il faut noter que dans le cas où T est fixe, sa mesure, en 29 n'est pas nécessaire et sa valeur est alors introduite directement en 32 à titre de constante ;

— calcul de l'angle $\varphi_{bo}$ selon la formule (11), symbolisé par le bloc 33 qui reçoit les variables $\theta_1$ et $\theta_2$ et la constante $2\Pi$ ;

— calcul de la valeur non entière de k par la formule (9), schématisé par le bloc 34 qui reçoit les variables $d_1$ et $\varphi_{bo}$, les constantes c/2 et $2\Pi$ et la valeur de $f_o$ traitée comme une constante ($f_o = f_p$) et contenue dans une ROM ;

— calcul de k à l'aide d'un circuit d'arrondi 35 qui identifie à k le nombre entier le plus proche de la valeur obtenue en sortie de 34 ;

— calcul de la distance $d_2$ à partir de la formule (8) symbolisé par le bloc 36 qui reçoit les variables $\varphi_{bo}$ et k et les constantes c/2, $2\Pi$ et $f_o$.

La valeur de $d_2$ est ensuite affichée par tout moyen connu. Les calculs indiqués ci-dessus sont de préférence assez rapides pour pouvoir être effectués pendant le temps qui sépare deux rampes consécutives du signal DDS. Il est alors possible de répéter la mesure de $d_2$ pour chaque rampe du signal d'émission. Ces calculs peuvent aussi être réalisés en logique câblée. Même dans ce dernier cas chacune des quatre opérations +, —, ×, % est effectuée de préférence par un circuit unique auquel différents paramètres sont présentés séquentiellement en tant qu'opérateurs de façon à obtenir le résultat souhaité décrit ci-dessus.

Ce qui précède suppose que la condition (10) est remplie. Pour cela, il faut que la mesure de $d_1$ soit suffisamment précise, ce qu'indique le calcul d'erreurs suivant :

A une erreur sur la mesure de $T_1$ correspond une erreur angulaire $d\zeta$ commise sur les N sinusoïdes comptées, telle que :

$$\frac{dT_1}{T_1} = 2\frac{d\zeta}{2\pi} \cdot \frac{1}{N} \tag{12}$$

le facteur 2 provenant du fait que les erreurs commises en début et en fin de $T_1$ sont indépendantes et peuvent se cumuler, $d\zeta$ étant l'erreur commise soit au début, soit à la fin de l'angle $\zeta$. La formule (12) peut s'écrire :

$$d\zeta = \pi\frac{N}{T_1}dT_1. \tag{13}$$

Par ailleurs, la dérivée de $d_1$ par rapport à $T_1$ à partir de la formule (4) s'écrit, sans tenir compte du signe :

$$dd_1 = \frac{-cNT}{2\,\Delta F\,T_1^2}dT_1 \tag{14}$$

soit, en tenant compte de la formule (13) :

$$dd_1 = \frac{cT}{2\,\pi T_1\,\Delta F}d\zeta. \tag{15}$$

D'autre part, pour profiter du supplément de précision apporté par la mesure de phase — utilisation de la formule (8) — il faut que la mesure de fréquence $f_o$ soit suffisamment précise pour que k' — formule (9) — puisse être calculé et que k puisse être déterminé en fonction de k' sans ambiguïté, c'est-à-dire que l'erreur sur $d_1$ soit telle que :

0 054 335

$$dd_1 < \frac{\lambda_0}{2} \qquad (16)$$

$\lambda_0$ étant la longueur d'onde du signal hyperfréquence à la fréquence $f_0$, soit encore :

$$dd_1 < \frac{c}{2\,f_0}. \qquad (17)$$

En combinant les formules (15) et (17) :

$$d\zeta < \pi \frac{T_1}{T} \cdot \frac{\Delta F}{f_0}. \qquad (18)$$

Comme décrit ci-dessus, les valeurs de $T_1$ et de $T$ peuvent être très voisines l'une de l'autre. Il y a intérêt à choisir le seuil 5 aussi proche que possible de la valeur $V_2$ (voir figure 3) en s'assurant toutefois que la valeur de $f_b$ soit assez grande pour que le signal Fb décrive au moins une sinusoïde pendant la durée $t_1$ à $t_2$. Le rapport $T_1/T$ pouvant être, en première approximation considéré comme égal à l'unité, l'inégalité (18) signifie que pour remplir la condition (10) il suffit d'obtenir sur l'angle $\zeta$ (N sinusoïdes du signal Fb) une précision, exprimée en radians, inférieure à $\Pi(\Delta F/f_0)$ soit par exemple une précision de l'ordre de $\Pi/10$ (18°) si l'on prend : $f_0 = 10\,\Delta F$. Une telle précision est facile à obtenir. En effet, la mesure précise de $T_1$ décrite ci-dessus implique une précision sur $\zeta$ de l'ordre de quelques degrés seulement.

On notera d'autre part que la précision obtenue sur $d_2$ est, en dérivant la formule (8) par rapport à $\varphi_{bo}$ et en négligeant l'erreur sur $f_0$ :

$$dd_2 = \frac{c}{4\,\pi f_0}\,d\varphi_{b0}. \qquad (19)$$

La formule (19) est à comparer à la formule (15). Si l'on considère en première approximation que : $d\varphi_{bo} \cong d\zeta$ et que : $T/T_1 \cong 1$, il apparaît que les précisions comparées sur $d_2$ et sur $d_1$ sont dans le rapport :

$$\frac{dd_2}{dd_1} = \frac{\Delta F}{2\,f_0}. \qquad (20)$$

Le rapport $\Delta F/f_0$ est avantageusement choisi le plus faible possible, vérification faite que la formule (18) est respectée pour toute la gamme de distances à mesurer.

Les calculs d'erreurs faits aux paragraphes précédents sont valides dans la mesure où les valeurs de $f_0$ et de $\Delta F$ peuvent être obtenues avec la précision d'un oscillateur à quartz, c'est-à-dire avec une erreur inférieure ou égale à celle obtenue sur les autres paramètres ou variables. On décrit ci-dessous, en référence à la figure 5 un radar qui permet, selon l'invention, d'obtenir les valeurs de $f_0$ et de $\Delta F$ avec une telle précision.

Sur la figure 5, sont représentés les principaux éléments du radar de la figure 1 avec boucle d'asservissement, ces éléments ayant même fonction : le VCO 1, le GDS 2, l'antenne émettrice-receptrice 3, le mélangeur 4, les coupleurs 5 et 6, l'amplificateur-filtre 7, le discriminateur de fréquence 8 (dit aussi discriminateur de poursuite) et l'intégrateur-anamorphoseur 9. Le GDS est constitué par un amplificateur opérationnel 53 dont la sortie 60 est reliée à son entrée inverseuse 54 par l'intermédiaire d'un condensateur 55. La commande de rampe du GDS a lieu par application d'un signal de tension continue sur l'entrée 54. D'autre part, un interrupteur 56 est monté en parallèle sur le condensateur 55 et un interrupteur 57 est monté sur le conducteur qui relie une borne de commande 58 à l'entrée inverseuse 54 par l'intermédiaire d'une résistance 80. Lorsque l'interrupteur 56 est ouvert, l'interrupteur 57 est fermé et que la tension sur l'entrée non inverseuse 59 est fixe, l'amplificateur opérationnel 53 fonctionne en intégrateur et constitue un générateur de dents de scie, le condensateur 55 se chargeant à débit constant à travers la résistance 80. Lorsque la tension sur la borne 58 est négative, on obtient ainsi un signal de tension croissant en fonction du temps à la sortie 60 de l'amplificateur 53, c'est-à-dire du GDS 2 (cas du radar de la figure 5) et pour une tension positive en entrée, un signal de tension décroissant en sortie. Le radar de la figure 5 comporte en outre selon l'invention des moyens de détection pour détecter l'instant $t_2$ où le signal F atteint une valeur de fréquence prédéterminée constante étale à : $f_1 + f_q$ et pour détecter l'instant $t_0$ où le signal F atteint une valeur de fréquence prédéterminée constante égale à : $f_1 - f_q$. Ces moyens de détection comportant en premier lieu un mélangeur de fréquence 61 qui reçoit sur une première entrée une fraction du signal de sortie F par l'intermédiaire d'un organe de couplage 62. D'autre part, un premier oscillateur à quartz 63 délivre un signal à fréquence fixe $f_1$ sur une deuxième entrée du mélangeur 61 dont la sortie est le siège d'un signal à fréquence $|f - f_1|$. Un comparateur de phase 64 reçoit sur une première entrée le signal à fréquence $|f - f_1|$ et sur une deuxième entrée un signal à fréquence $f_q$ constante délivré par un deuxième oscillateur à quartz 65.

8

A partir de la configuration décrite ci-dessus, la détection des instants $t_0$ et $t_2$ obtenue à partir du comparateur de phase 64 peut se faire de plusieurs façons dont l'une est décrite ci-dessous en référence à la figure 5. Sur la figure 5 est représentée une boucle de phase qui comporte, à partir de la sortie du comparateur de phase 64 un amplificateur-filtre 73, un convertisseur analogique-numérique (CAN) 74 et, à partir d'un point de branchement 75, un convertisseur numérique-analogique (CNA) 76 et un CNA 77. Les convertisseurs 74 et 76 ou 74 et 77 sont reliés entre eux par plusieurs conducteurs, ce qui est symbolisé sur le dessin par un conducteur unique coupé par une barre oblique. Il s'agit par exemple de 12 conducteurs dont un conducteur pour le bit de signe, permettant de compter des nombres compris entre — 2047 et 2048. La sortie du CNA 77 est reliée à travers une résistance 78 à l'entrée inverseuse d'un comparateur 81 qui est de préférence un amplificateur opérationnel. La deuxième entrée du comparateur 81, c'est-à-dire l'entrée non inverseuse reçoit le signal de sortie de l'amplificateur opérationnel 53 qui se confond avec celui du GDS 2 en 60. La sortie du comparateur 81 est reliée à l'entrée d'un circuit logique 82 comportant des temporisateurs et des circuits-portes logiques et qui possède quatre sorties de commande, référencées 83, ces sorties pouvant être le siège de signaux logiques sous forme de deux niveaux de tension constante représentant les états logiques « 0 » ou « 1 ». Le circuit logique 82 comporte de préférence deux circuits monostables disposés en série, le premier monostable, déclenché par un front montant déterminant la durée $\lambda$ du palier haut de la dent de scie et le deuxième monostable, déclenché par un front descendant à partir du premier, déterminant la durée $\delta$ du palier bas de la dent de scie de tension en sortie du GDS ou de fréquence en sortie du VCO. Une première et une deuxième sortie servent au verrouillage ou au déverrouillage des CNA 77 et 76 respectivement, une troisième et une quatrième sortie commandant l'ouverture ou la fermeture des interrupteurs 56 et 57 respectivement. Ces quatre sorties sont symbolisées par des lignes en trait interrompu 83 et sont issues de circuits-portes logiques, internes au circuit 82, le tout constituant des moyens de commutation et de verrouillage. La sortie du CNA 76 est reliée à l'entrée 59 de l'amplificateur opérationnel 53 par l'intermédiaire d'une résistance 85. Les organes 53 et 81 sont par exemple des amplificateurs opérationnels µA101A fabriqués par la société Fairchild. Un cycle de fonctionnement du radar selon la figure 5 est décrit ci-dessous. On peut considérer avec une très bonne approximation que la borne 58 est le siège d'une tension négative constante, ce qui, lors de la phase de fonctionnement de l'amplificateur opérationnel 53 en intégrateur, résulte en une rampe de tension croissante en 60 et en un signal hyperfréquence dont la fréquence varie de façon croissante sensiblement linéaire en sortie du VCO 1. Cette phase est celle pendant laquelle les CNA 76 et 77 sont verrouillés, l'interrupteur 56 est ouvert et l'interrupteur 57 fermé sous la commande des moyens de verrouillage et de commutation comme expliqué ci-dessous, le mélangeur 61 délivrant, avant l'instant $t_2$, un signal de fréquence égal à : $f - f_1$. A l'instant $t_2$, le signal F atteint (respectivement atteindrait) la valeur prédéterminée $F_2 = f_1 + f_q$ et le signal en sortie du mélangeur 61 la valeur $f_q$. A un instant très proche de $t_2$ le signal croissant sur l'entrée non inverseuse du comparateur 81 devient égal au signal sur l'entrée inverseuse. Lorsque ceci se produit, le signal de tension en sortie du comparateur 81 bascule d'un niveau bas à un niveau haut, ce front montant déclenchant le circuit logique 82, en l'occurrence le premier monostable caractérisé par sa durée $\gamma$ ; à partir de cet instant très proche de $t_2$, l'interrupteur 57 est ouvert, sous l'action du quatrième conducteur 83, ce qui arrête la charge du condensateur 55 et fige la sortie 60 à un niveau de fréquence très proche de $f_1 + f_q$ (le CNA 76 restant verrouillé), et le CNA 77 est déverrouillé (premier conducteur 83), ce qui permet à la boucle de phase d'agir sur l'entrée inverseuse du comparateur 81 de façon à réajuster cette tension, qui agit comme une tension de seuil, à une valeur qui correspond à une valeur de fréquence égale à $f_2 = f_1 + f_q$ pour le signal F. Ce fonctionnement se poursuit pendant une durée arbitraire : $\gamma = t_3 - t_2$ (voir figure 3) déterminée par une temporisation interne au circuit 82 (durée du premier monostable). L'instant $t_3$ marque la fin de $\gamma$ qui déclenche une nouvelle temporisation $\delta$ (activation du deuxième monostable) pendant laquelle le CNA 77 est verrouillé, le CNA 76 est déverrouillé, l'interrupteur 56 est fermé, le condensateur 55 est déchargé et la fréquence f devient proche de $f_1 - f_q$, l'interrupteur 57 restant ouvert. Pendant cette phase, l'amplificateur opérationnel 53 fonctionne en amplificateur suiveur de gain unité (contre réaction totale) et la boucle de phase maintient la valeur de f égale à : $f_p = f_1 - f_q$. De préférence, le signal de sortie des CNA 76 et 77 est pré-réglé pour que les valeurs de fréquence $f_2$, correspondant à la tension $V_2$ (figure 3) respectivement $f_p$ correspondant à la tension $V_1$ soient obtenues pour des valeurs numériques proches de zéro en entrée des CNA 76 et 77 respectivement. Dans ce but sont branchés en série à l'extrémité de la résistance 78 située du côté du comparateur 81 une résistance 86 et un potentiomètre 87 et à l'extrémité correspondante de la résistance 85, une résistance 88 et un potentiomètre 89. Ceci permet d'avoir un ajustement rapide de la valeur de $\Delta F$ à la valeur : $f_2 - f_p = 2 f_q$, surtout en ce qui concerne la limitation de f à la valeur du palier supérieur à la fréquence $f_2$ comme on le verra ci-dessous. D'autre part, cette mesure permet d'optimiser la plage de régulation des boucles de phase en la rendant la plus grande possible étant donné que la valeur zéro se situe au milieu de l'échelle de codage choisie pour les CNA 76 et 77.

Il faut noter que pendant les durées $\gamma$ et $\delta$, la fréquence du signal de sortie du mélangeur 61 est restée sensiblement constante et égale à $f_q$. La fin de $\delta$, en $t_0$, se traduit par un front descendant en sortie du deuxième monostable, entraînant l'ouverture de l'interrupteur 56, la fermeture de l'interrupteur 57 et le verrouillage du CNA 76. On se retrouve donc avec la même configuration qui existait juste avant l'instant $t_2$, soit dans la phase du cycle pendant laquelle la boucle de phase est inhibée et où l'amplificateur opérationnel 53 fonctionne en que générateur de rampe. Pendant la durée qui s'écoule de $t_o$ à $t_2$, la fréquence f croît linéairement de $f_p$ à $f_2$, alors que la fréquence du signal de sortie du mélangeur 61 est d'abord égale à $f_1 - f$ puis, après passage par zéro, à $f - f_1$, et le cycle recommence.

On notera que lors de ce fonctionnement la correction exercée par la boucle de phase est prise en compte à l'instant $t_3$, au moment du verrouillage du CNA 77 et n'exerce son effet qu'à l'instant $t_2$ qui marque le début du cycle suivant. Pendant la durée $\gamma$, la fréquence du signal F, proche de $f_2$, est indépendante des fluctuations du signal sur l'entrée inverseuse du comparateur 81. Il s'ensuit qu'une durée pouvant atteindre plusieurs dizaines de fois celle d'un cycle $(T + \gamma + \delta)$ est nécessaire pour ajuster la fréquence F à la valeur $f_2$ pendant le palier $\gamma$ de chaque cycle, avec une précision de l'ordre de $10^{-5}$ à $10^{-7}$ dans le cas préféré où les oscillateurs 63 et 65 sont des oscillateurs à quartz. Cette durée est d'autant plus réduite que le pré-réglage du CNA 77 indiqué ci-dessus au moyen du potentiomètre 87 est précis, ce qui permet en outre de donner au CNA la meilleure sensibilité en faisant en sorte que l'échelon de tension élémentaire en sortie du CNA 77 soit le plus petit possible et provoque une variation de fréquence discrète inférieure à l'erreur de fréquence des oscillateurs 63 et 65. Si la durée d'un cycle est de 10 ms, par exemple, un temps de l'ordre de la seconde peut être nécessaire pour ajuster la fréquence f à la valeur $f_2$ pendant le palier $\gamma$ de chaqsue cycle, ce qui est admissible pour la plupart des applications, mais pour un cycle de 500 ms par contre, un temps de l'ordre de la minute peut être considéré comme trop long. Il faut noter que certains organes du dispositif peuvent subir des dérives en température ou des dérives dues au vieillissement, le VCO 1, notamment. Dans ce cas, malgré un pré-réglage précis du CNA 77 au moyen du potentiomètre 87, le temps d'ajustement de f à la valeur $f_2$ est accru et il peut s'avérer nécessaire de refaire occasionnellement le réglage.

Par contre, l'ajustement de f à la valeur : $f_p = f_1 - f_q$ pendant la durée $\delta$ de chaque cycle a lieu de façon quasi instantanée pendant la durée $\delta$ même, soit en une ou quelques millisecondes environ, étant donné le rebouclage direct de la deuxième boucle de phase à travers le CNA 76, l'amplificateur opérationnel 53 et le VCO 1. Les interrupteurs 56 et 57 de la figure 5 sont de préférence des transistors à effet de champ commandés par leur grille, à partir du circuit logique 82, par l'intermédiaire des troisième et quatrième sorties 83 qui sont le siège de signaux logiques aptes à opérer la séquence de commutation adéquate pour les interrupteurs 56 et 57 et par exemple telle que décrite ci-dessus. Dans le radar de la figure 5, les signaux Fb et DDS sont prélevés comme décrit en référence à la figure 1, et le signal DE est prélevé sur la quatrième sortie 83 qui commande l'ouverture et la fermeture de l'interrupteur 57. Selon le type de logique utilisé en 83, 56 et 57 il peut être nécessaire de complémenter par un inverseur le signal logique déduit de la quatrième sortie 83 pour obtenir le signal DE représenté à la figure 3. Les valeurs $\Delta F = 2 f_q$ et $f_p = f_1 - f_q$, prédéterminées et obtenues avec précision peuvent dès lors être introduites comme des constantes dans le dispositif de calcul (partie droite de la figure 2), moyennant le choix avantageux : $f_o = f_p$.

Pour obtenir une stabilisation de $\Delta F$ à la valeur très précise requise au cours de chaque cycle, il est possible de rendre symétrique l'action de la boucle de phase pendant les paliers de durée $\gamma$ et $\delta$, moyennant une légère complication du radar de la figure 5 et une modification partielle de la séquence de commutation des interrupteurs 56 et 57. Cette variante du radar n'est pas représentée. Partant du schéma de la figure 5, elle consiste à relier le point commun aux résistances 85 et 88 à l'entrée non inverseuse 59 de l'amplificateur opérationnel 53 par l'intermédiaire du trajet source-drain d'un transistor à effet de champ dont la grille peut être commandée par le premier conducteur 83 relié à la sortie du premier monostable à l'intérieur du circuit 82. De façon symétrique, le point commun aux résistances 78 et 86 est relié à l'entrée non inverseuse 59 de l'amplificateur opérationnel 53 par l'intermédiaire du trajet source-drain d'un transistor à effet de champ dont la grille est commandée par le signal complémentaire de celui sur le premier conducteur 83. Pour la commande des interrupteurs 56 et 57, la sortie de chaque monostable est reliée à une entrée d'un circuit-porte OU dont la sortie commande directement l'un des interrupteurs 56, 57 et, après complémentation du signal, l'autre interrupteur. On obtient ainsi un fonctionnement identique au précédent en ce qui concerne les phases de durée $\delta$ et $t_0$ à $t_2$, le fonctionnement pendant la durée $\gamma$ devenant analogue à celui pendant la durée $\delta$ du fait que la boucle de phase agit alors directement par l'intermédiaire du CNA 77 sur l'entrée 59. Dans ce cas, les états logiques des interrupteurs 56 et 57 sont complémentaires, l'interrupteur 57 étant fermé et l'interrupteur 56 ouvert pendant la rampe de la dent de scie et 57 ouvert, 56 fermé pendant les paliers séparant deux rampes consécutives. Le front descendant en sortie du premier monostable (instant $t_3$) déclenche par exemple le calcul de $d_2$ dans le microprocesseur.

Il est encore possible, pour l'obtention des valeurs de $\Delta F$ et $f_o$ avec une grande précision de s'affranchir des paliers qui séparent les rampes de la dent de scie et de l'action de la boucle de phase décrite ci-dessus, pourvu que les points $(f_0, t_O)$ et $(f_2, t_2)$ marquant les extrémités de la rampe pour chaque dent de scie de la courbe F(t) soient déterminés de façon précise. Pour cela, de façon non représentée, les éléments 61 à 65 de la figure 5 sont conservés, les éléments 73 à 89 supprimés et la sortie du comparateur de phase 64 est reliée à un microprocesseur par l'intermédiaire d'un détecteur d'amplitude, d'un circuit de comparaison par rapport à un seuil de tension et de mise en forme et d'un compteur numérique qui reçoit aussi les signaux d'horloge Ø et de remise à zéro RAZ. Ce microprocesseur est avantageusement le même que celui qui effectue les calculs décrits avec référence à la partie droite de la figure 2.

Une application de l'invention à la mesure précise de courtes distances est décrite ci-dessous en référence à la figure 6. La référence 91 désigne un VCO à grenat d'Yttrium, appartenant à l'un des radars décrits plus haut. L'application consiste à mesurer la hauteur du niveau 92 d'un liquide 93 dans un réservoir 94 représenté avec une partie arrachée. Le liquide est par exemple de l'hydrogène liquide et la distance à mesurer est par exemple comprise entre 1,5 m et 8 m. Un guide d'ondes 95, d'une longueur supérieure à la hauteur du réservoir relie la sortie du VCO 91 au fond du réservoir, constituant un équivalent avantageux de l'antenne émettrice-réceptrice 3 (figures 1 et 5). Une lumière, non représentée, est prévue à la partie basse du guide d'ondes, pour permettre au liquide de pénétrer à l'intérieur du guide. La puissance émise par le VCO est de l'ordre de 5 mW. Un premier atténuateur de 3 dB à lame de carbone 96 est placé entre le VCO 91 et les diodes 97 qui font office de coupleurs (5, 6) à l'émission et à la réception, ceci en protection contre les réflexions parasites. Les diodes 97 ont leur cathode reliée à un mélangeur 98 d'un type connu, par exemple un mélangeur 5 $\lambda$/4. Le couplage des deux diodes leur donne environ 0,5 mW d'oscillation locale chacune. La puissance restante, soit 1,5 mW environ part dans le guide, après une seconde atténuation de 6 dB par un atténuateur 99 et traversée d'un radôme en matériau diélectrique symbolisé par la référence 100. La partie du guide située entre les atténuateurs 96 et 99 peut être portée à une température prédéterminée à l'aide d'une résistance de chauffage 101.

Dans la partie du guide d'ondes située à l'intérieur du réservoir, la cible est constituée soit par une fine lamelle de cuivre de 0,01 mm d'épaisseur environ maintenue à la surface libre du liquide par l'effet de la tension superficielle, soit de préférence par la surface libre même du liquide. Afin d'éviter les réflexions parasites au fond du réservoir le guide est terminé, à son extrémité inférieure, par une charge adaptatrice d'impédances, ou bien il débouche sur un réflecteur métallique oblique 102 destiné à évacuer latéralement l'énergie qui n'aurait pas été réfléchie à la surface libre du liquide.

Pour fixer les idées, le VCO 91 émet par exemple un signal F modulé linéairement entre $f_p = 10$ GHz et $f_2 = 12$ GHz, soit : $\Delta F = f_2 - f_p = 2$ GHz. Ces valeurs de fréquence correspondent respectivement, pour les fréquences des oscillateurs à quartz 63 et 65 (figure 2) à :

$$f_1 = 11 \text{ GHz}$$
$$f_q = 1 \text{ GHz}$$

La fréquence centrale $f_{bo}$ du discriminateur de fréquence (8, figure 1 ou 5) est égale à 100 Hz.

La distance d à mesurer étant comprise entre 1,5 m et 8 m, la durée T de la dent de scie est comprise entre 200 ms et 1 066 ms

$$\left( T = \frac{2 \, d \, \Delta F}{c f_b} \right).$$

Si par ailleurs on prend :

$$d\varphi_{bo} = d\zeta = 10°$$
$$T = 1,1 \, T_1$$

on trouve, en vertu de la formule (15) :

$$d \, d_1 = 4,6 \text{ mm}$$

et, en vertu de la formule (19) :

$$d \, d_2 = 0,417 \text{ mm}.$$

## Revendications

1. Procédé pour la détermination précise de la distance d d'un objet par rapport à et à l'aide d'un radar du type FM-CW comportant un générateur VCO (1) d'un signal hyperfréquence F de fréquence instantanée f modulé linéairement en fréquence par un modulateur GDS (2) engendrant un signal de tension en dents de scie DDS présentant chacune une rampe de durée T pendant laquelle le signal F décrit une excursion linéaire de fréquence de valeur $\Delta F$ prédéterminée, constante, et connue avec précision, une antenne émettrice-réceptrice (3) et un mélangeur (4) qui reçoit le signal émis, et le signal reçu F' de fréquence instantanée f' après réflexion sur l'objet dont on veut mesurer l'éloignement d, et qui délivre un signal Fb de fréquence $f_b$ le procédé étant caractérisé en ce qu'il comporte les étapes suivantes pendant la durée T d'une dent de scie :

a) la mesure précise de la fréquence $f_o$ du signal F à un instant $t_o$ par utilisation d'une boucle de phase comportant deux oscillateurs à quartz (63, 65) et des moyens de commutation et de verrouillage (82, 83), et de la phase $\varphi_{bo}$ selon la formule :

$$\varphi_{b0} = \frac{2\pi(\theta_2 - 2\theta_1)}{\theta_2 - \theta_1}$$

les durées $\theta_1$ et $\theta_2$ étant déterminées par comptage au moyen de compteurs rapides, $\theta_1$ et $\theta_2$ marquant respectivement la fin de la première et de la deuxième sinusoïde du signal Fb avec, pour origine, l'instant $t_0$ ;

b) la détermination d'un train de N périodes, N entier, du signal Fb dont on mesure la valeur N et la durée $T_1$ comprise dans la durée T,

c) le calcul d'une valeur relativement précise de d, notée $d_1$, à partir des valeurs $\Delta F$, T et des valeurs trouvées pour N et $T_1$ à l'étape précédente,

d) le calcul approché de $\varphi$, noté $\varphi_1$, qui est le déphasage global entre signaux émis et reçu à partir des valeurs de $f_0$ et $d_1$ trouvées aux étapes précédentes,

e) la détermination de l'angle $2k\Pi$, réellement contenu dans l'angle $\varphi$, k étant la partie entière de la valeur :

$$\frac{f_0\, NT}{\Delta FT_1} - \frac{\varphi_{b0}}{2\pi} \qquad .$$

moyennant que la précision de mesure exprimée en radians de l'angle électrique que représentent les N périodes du signal Fb soit inférieure à :

$$\pi\frac{T_1}{T}\,\frac{\Delta F}{f_0};$$

f) l'identification de la valeur précise de $\varphi$, notée $\varphi_2$ à la somme : $\varphi_{b0} + 2k\Pi$,

g) le calcul de la valeur précise de d, notée $d_2$, à partir des valeurs de $f_0$ et de $\varphi_2$ trouvées aux étapes précédentes.

2. Procédé pour la détermination précise de distance selon la revendication 1, mettant en œuvre un radar du type FM-CW pour lequel la durée T de chaque dent de scie est prédéterminée, constante et connue avec précision.

3. Procédé pour la détermination précise de distance selon la revendication 1, mettant en œuvre un radar du type FM-CW comportant une boucle d'asservissement entre la sortie dudit mélangeur (4) et l'entrée dudit modulateur (2) pour maintenir sensiblement constante la fréquence $f_b$ du signal Fb de sortie dudit mélangeur, caractérisé en ce qu'il comporte l'étape supplémentaire qui consiste en la mesure précise de la durée T de la dent de scie considérée.

4. Appareil de mesure de distance pour la mise en œuvre du procédé selon l'une des revendications 1 à 3, du type FM-CW comportant un générateur VCO (1) d'un signal hyperfréquence F de fréquence instantanée f modulée linéairement en fréquence par un modulateur GDS (2) engendrant un signal de tension en dents de scie DDS présentant chacune une rampe de durée T pendant laquelle le signal F décrit une excursion linéaire de fréquence de valeur $\Delta F$ prédéterminée, constante et connue avec précision, une antenne émettrice-réceptrice (3) et un mélangeur (4) qui reçoit le signal émis, et le signal reçu F' de fréquence instantanée f' après réflexion sur l'objet dont on veut mesurer l'éloignement d, et qui fournit un signal Fb de fréquence $f_b$, l'appareil comportant en outre des premiers moyens de mise en forme (15) dudit signal Fb sous forme d'un signal carré A ayant même phase et même fréquence $f_b$ et étant caractérisé en ce qu'il comporte aussi :

— des deuxièmes moyens de mesure pour la détermination de la phase $\varphi_{b0}$ du signal carré à fréquence $f_b$ à l'instant marquant le début de la durée T où la fréquence f du signal F est égale à une valeur prédéterminée précise $f_p(f_0 = f_p)$, comportant d'une part une boucle de phase munie de deux oscillateurs à quartz (63, 65) et des moyens de commutation et de verrouillage (82, 83) pour engendrer ladite valeur de fréquence $f_p$, d'autre part des compteurs rapides (24, 28) pour mesurer les durées $\theta_1$ et $\theta_2$ qui marquent respectivement la fin de la première et de la deuxième sinusoïde du signal Fb avec, pour origine, ledit instant marquant le début de la durée T ;

— des troisièmes moyens de mesure pour la détermination de la fréquence $f_b$ à partir d'un train de signaux carrés appartenant au signal A et dont le nombre de périodes N (N entier, arbitraire) et la durée $T_1$ comprise dans la durée T peuvent être mesurés avec précision, lesdits troisièmes moyens comportant à cet effet un circuit à seuil (14) qui reçoit le signal DDS et un signal de tension de seuil S, des circuits logiques tels qu'une bascule bistable (25) qui reçoit le signal A et des circuits-portes logiques (17, 19) et des compteurs (18, 20) ;

— des quatrièmes moyens de calcul et d'affichage (31 à 36) pour la détermination de la distance précise $d_2$ à partir des valeurs des paramètres $\Delta F$, $\theta_1$, $\theta_2$, $f_p$, N, $T_1$ et T mesurés pendant une (chaque) rampe de dent de scie, par utilisation des formules suivantes :

$$d_1 = \frac{cNT}{2\,\Delta F\,T_1}; \quad \varphi_{b0} = 2\,\pi\,\frac{\theta_2 - 2\,\theta_1}{\theta_2 - \theta_1};$$

k = partie entière de

$$\frac{2\,f_p\,d_1}{c} - \frac{\varphi_{b0}}{2\pi}; \quad d_2 = \frac{c}{4\,\pi f_p}\,(\varphi_{b0} + 2\,k\pi)$$

$d_1$ étant une valeur de la distance relativement précise et les valeurs de $T_1$, T, $\Delta F$ et $f_p$ étant telles que la précision de mesure exprimée en radians de l'angle électrique que représentent les N périodes du signal Fb soit inférieure à :

$$\pi\,\frac{T_1}{T}\,\frac{\Delta F}{f_p}\,.$$

5. Appareil de mesure de distance selon la revendication 4, caractérisé en ce qu'il comporte en outre des moyens de détection pour détecter l'instant $t_2$ où le signal F atteint une valeur de fréquence prédéterminée constante égale à $f_1 + f_q$ et pour détecter l'instant $t_0$ où le signal F atteint une valeur de fréquence prédéterminée constante égale à $f_1 - f_q$, lesdits moyens de détection étant constitués par un mélangeur de fréquence (61) qui reçoit sur une première entrée par l'intermédiaire d'un organe de couplage (62) monté à la sortie du VCO une fraction du signal F, un premier oscillateur à quartz (63) qui délivre un signal à fréquence $f_1$ sur une deuxième entrée dudit mélangeur de fréquence qui délivre un signal dont la fréquence est égale à $|f - f_1|$, et un comparateur de phase (64) qui reçoit sur une première entrée le signal à fréquence $|f - f_1|$ et sur une deuxième entrée un signal à fréquence $f_q$ constante délivré par un deuxième oscillateur à quartz (65).

6. Appareil de mesure de distance selon lequel chaque dent de scie est suivie par un premier palier, respectivement précédée par un deuxième palier selon la revendication 5, caractérisé en ce qu'il comporte en outre d'une part une boucle de phase comportant en cascade à partir de la sortie dudit comparateur de phase un amplificateur-filtre (73), un convertisseur analogique-numérique (74), un point de branchement (75) relié à un premier convertisseur numérique-analogique (CNA) (77) suivi d'un comparateur (81) et à un deuxième CNA (76) suivi dudit modulateur GDS, d'autre part des moyens de commutation et de verrouillage (82) actionnés par un circuit logique lui-même commandé par la sortie dudit comparateur et déterminant la durée $\gamma$ dudit premier palier et la durée $\delta$ dudit deuxième palier.

7. Appareil de mesure de distance selon la revendication 6, caractérisé en ce que ladite boucle de phase agit à l'instant $t_2$ marquant le début de la durée $\gamma$ dudit premier palier sur une première entrée dudit comparateur qui reçoit sur une deuxième entrée le signal de sortie dudit GDS maintenu pendant $\gamma$ à la fréquence du premier palier par l'intermédiaire desdits moyens de commutation et de verrouillage, la boucle de phase agissant pendant la durée $\delta$ du deuxième palier sur une première entrée non inverseuse d'un amplificateur opérationnel interne au GDS, dont la sortie est, pendant $\delta$, rebouclée sur sa deuxième entrée, inverseuse (54).

8. Appareil de mesure de distance selon la revendication 6, caractérisé en ce que ladite boucle de phase agit pendant la durée $\gamma$ du premier palier, respectivement la durée $\delta$ du deuxième palier, sur la première entrée non inverseuse dudit amplificateur opérationnel dont la sortie est, pendant $\gamma$ et $\delta$, rebouclée sur sa deuxième entrée inverseuse (54).

9. Appareil de mesure de distance selon la revendication 5, caractérisé en ce qu'il comporte en outre en cascade en sortie dudit comparateur de phase un détecteur d'amplitude et un circuit de mise en forme de signal produisant des impulsions lorsque les fréquences des signaux d'entrée du comparateur de phase sont égales, lesdites impulsions étant transmises à un compteur numérique relié à un microprocesseur qui détermine avec précision l'apparition des instants $t_0$ et $t_2$ et la durée T comprise entre ces deux instants.

10. Utilisation de l'appareil de mesure de distance pour la mise en œuvre du procédé selon l'une quelconque des revendications précédentes, pour mesurer le niveau de la surface libre (92) d'un liquide (93) dans un réservoir (94), caractérisée en ce que la sortie dudit VCO (91) est reliée au fond du réservoir par l'intermédiaire d'un guide d'ondes (95) qui comporte en cascade, du VCO vers le fond du réservoir, un premier atténuateur (96), une diode pour le couplage à l'émission (97), une diode pour le couplage à la réception (97) ainsi qu'une résistance de chauffage (101) disposée extérieurement, un deuxième atténuateur (99), la paroi diélectrique (100) d'un radôme et, après traversée de la paroi supérieure du réservoir, la surface libre du liquide faisant office de réflecteur pour l'onde radioélectrique et, à proximité du fond du réservoir, un organe (102) ayant pour fonction d'éliminer les réflexions parasites de l'onde au fond du réservoir.

**Claims**

1. A method of accurately determining the distance d of an object to and by means of a radar of the FM-CW type comprising a VCO (1) generating a high frequency signal F having an instantaneous frequency f which frequency is linearly modulated by a modulator GDS (2) generating a sawtooth supply voltage DDS each sawtooth having a slope of a duration T during which the signal F describes a linear frequency excursion of a predetermined, constant, accurately known value $\Delta F$, a transmitting-receiving aerial (3) and a mixer (4) receiving the transmitted signal, and the received signal F' having an instantaneous frequency f' after reflection from the object whose distance d is to be measured, and which produces a signal Fb having a frequency $f_b$, the method being characterized in that it comprises the following steps during the duration T of a sawtooth period :

a) the accurate measurement of the frequency $f_0$ of the signal F at an instant $t_0$ by using a phase loop comprising two quartz oscillators (63, 65) and switching and locking and locking means (82, 83), and the phase $\varphi_{b0}$ defined by the formula :

$$\varphi_{b0} = \frac{2\,\pi(\theta_2 - 2\,\theta_1)}{\theta_2 - \theta_1}$$

the durations $\theta_1$ and $\theta_2$ being determined by counting, with the aid of fast counters, $\theta_1$ and $\theta_2$ indicating the respective ends of the first and second sinewaves of the signal Fb with, as the starting point, the instant $t_0$ ;

b) the determination of a train of N periods, N being an integer, of the signal Fb of which the value N and the duration $T_1$ comprised in the duration T are measured,

c) the calculation of a comparatively precise value of d, denoted by $d_1$, on the basis of the values $\Delta F$, T and the values found for N and $T_1$ in the preceding step,

d) the calculation of the approximate value of $\varphi$, denoted by $\varphi_1$, which is roughly the phase shift between the transmitted and received signals on the basis of the values for $f_0$ and $d_1$ found during the preceding steps,

e) the determination of the angle $2k\pi$, actually contained in the angle $\varphi$, k being the integral portion of the value :

$$\frac{f_0\,NT}{\Delta F T_1} - \frac{\varphi_{b0}}{2\,\pi}$$

provided the measuring precision expressed in radians of the electric angle which represent the N periods of the signal Fb is less than :

$$\pi\,\frac{T_1}{T}\,\frac{\Delta F}{f_0}\,;$$

f) identifying the accurate value of $\varphi$, denoted by $\varphi_2$ in the sum : $\varphi_{b0} + 2k\pi$,

g) calculating the accurate value of d, denoted by $d_2$, on the basis of the values for $f_0$ and $\varphi_2$ found during the preceding step.

2. A method for accurately determining the distance as claimed in Claim 1, using a radar of the FM-CW type for which the duration of each sawtooth is predetermined, constant and accurately known.

3. A method of accurately determining the distance as claimed in Claim 1, using a radar of the FM-CW type comprising a control loop arranged between the output of said mixer (4) and the input of said modulator (2) for keeping the frequency $F_b$ of the output signal Fb of said mixer substantially constant, characterized in that it comprises the additional step of accurately measuring the duration T of the actual sawtooth.

4. A range measuring apparatus for putting the method as claimed in any of the Claims 1 to 3 into effect, the apparatus being of the FM-CW type comprising a VCO (1) generating a high frequency signal F having an instantaneous frequency f which frequency is linearly modulated by a modulator GDS (2) generating a sawtooth supply voltage DDS each sawtooth having a slope of a duration T during which the signal F describes a linear frequency excursion of a predetermined, constant, and accurately know value $\Delta F$, a transmitting-receiving aerial (3) and a mixer (4) receiving the transmitted signal, and the received signal F' having an instantaneous frequency f' after reflection from the object whose distance d is to be measured, and producing a signal Fb having a frequency $f_b$, the apparatus further comprising first means (15) for shaping said signal Fb in the form of a squarewave signal A having the same phase and the same frequency $f_b$ and being characterized in that it also comprises :

— second measuring means for determining the phase $\varphi_{b0}$ of the square-wave signal of the frequency $f_b$ at an instant indicating the start of the duration T in which the frequency f of the signal F is equal to an accurate predetermined value $f_p$, comprising a phase-locked loop including two quartz oscillators (63, 65) and switching and locking means (82, 83) for generating said value of the frequency $f_p$, and also fast counters (24, 28) for measuring the durations $\theta_1$ and $\Theta_2$ which indicate the respective ends of the first and the second sinewaves of the signal Fb with, as the starting point, said instant indicating the beginning of the duration T ;

14

— third measuring means for determining the frequency $f_b$ from a train of square-wave signals associated with the signal A and whose number of periods N (N being a random integer) and the duration $T_1$ comprised in the duration T can be measured with a very high degree of accuracy, said third means comprising to that end a threshold circuit (14) receiving the signal DDS and a threshold voltage signal S, logic circuits such as a bistable trigger circuit (25) receiving the signal A and logic gate circuits (17, 19) and counters (18, 20) ;

— fourth measuring and display means (31 to 36) for determining the precise distance $d_2$ from the values of the parameters $\Delta F$, $\theta_1$, $\theta_2$, $f_p$, N, $T_1$ and T measured during a (each) sawtooth slope by using the following formulae :

$$d_1 = \frac{cNT}{2\,\Delta F\,T_1}; \quad \varphi_{b0} = 2\,\pi\,\frac{\theta_2 - 2\,\theta_1}{\theta_2 - \theta_1};$$

k = integral portion of

$$\frac{2\,f_p\,d_1}{c} - \frac{\varphi_{b0}}{2\pi}; \quad d_2 = \frac{c}{4\,\pi f_p}\,(\varphi_{b0} + 2\,k\pi)$$

$d_1$ being a comparatively accurate value of the distance, and the values of $T_1$, T, $\Delta F$ and $f_p$ being such that the measuring precision expressed in radians of the electric angle which represent the N periods of the signal Fb are less than :

$$\pi\frac{T_1}{T}\,\frac{\Delta F}{f_p}\,.$$

5. A range measuring apparatus as claimed in Claim 4, characterized in that it furthermore comprises detection means for detecting the instant $t_2$ at which the signal F reaches a predetermined constant frequency equal to $f_1$ and $f_q$ and for detecting the instant $t_0$ at which the signal F reaches a predetermined, constant frequency equal to $F_1 - f_q$, said detection means being formed by a frequency mixer (61) receiving at a first input via a coupling means (62) provided at the output of the VCO a fraction of the signal F, a first quartz oscillator (63) producing a signal having a frequency $f_1$ at a second input of said frequency mixer which produces a signal whose frequency is equal to $|f - f_1|$, and a phase comparator (64) receiving at a first input the signal of the frequency $|f - f_1|$ and at a second input a signal of a constant frequency $f_q$ produced by a second quartz oscillator (65).

6. A range measuring apparatus in which each sawtooth is followed by a first threshold or preceded by a second threshold, respectively as claimed in Claim 5, characterized in that if furthermore comprises a phase-control loop having, arranged in cascade from the output of said phase comparator, an amplifier-filter (73), an analogue-to-digital converter (74), a tapping point (75) connected to a first digital-to-analogue converter (DAC) (77) followed by a comparator (81) and to a second DAC (76) followed by said modulator GDS, and also comprises switching and blocking means (82) which are responsive to a logic circuit which itself is controlled by the output signal of said comparator and determines the duration $\gamma$ of said first threshold and the duration $\delta$ of said second threshold.

7. A range measuring apparatus as claimed in Claim 6, characterized in that said phase control loop acts at the instant $t_2$ which indicates the beginning of the duration $\gamma$ of said first threshold on a first input of said comparator which receives at a second input the output signal of said GDS which during $\gamma$ is kept at the frequency of the first threshold by means of said switching and locking means, the phase control loop acting during the duration $\delta$ of the second threshold on a first non-inverting input of an operational amplifier incorporated in GDS, whose output is fed back, during $\delta$, to its second inverting input (54).

8. A range measuring apparatus as claimed in Claim 6, characterized in that during the period $\gamma$ of the first threshold and the duration $\delta$ of the second threshold, respectively, said phase control loop acts on the first non-inverting input of said operational amplifier whose output, during $\gamma$ and $\delta$, is fed-back to its second inverting input (54).

9. A range measuring apparatus as claimed in Claim 5, characterized in that it furthermore comprises, arranged in cascade from the output of said phase comparator, an amplitude detector and a signal shaping circuit which produces pulses when the frequencies of the input signals of the phase comparator are equal, said pulses being transmitted to a digital counter connected to a microprocessor which determines with great accuracy the appearance of the instants $t_0$ and $t_2$ and the duration T comprised between these two instants.

10. Using the range measuring apparatus for putting the method as claimed in anyone of the preceding Claims into effect, to measure the level of the free surface (92) of a liquid (93) in a container (94), characterized in that the output of said VCO (91) is connected to the bottom of the container by means of a waveguide (95) comprising, arranged in cascade, from the VCO to the bottom of the container, a first attenuator (96), a diode for coupling to the transmission (97), a diode for coupling to the reception (97) and also a heating resistor (101) arranged exterially, a second attenuator (99), the dielectric wall (100) of a radar dome and, after having passed through the upper wall of the container, the free surface of the liquid acting as a reflector for the radio-electric wave and, near the bottom of the container, an element (102) which has for its function to eliminate the parasitic reflections of the waves at the bottom of the container.

**Patentansprüche**

1. Verfahren zur genauen Bestimmung des Abstandes eines Gegenstandes gegenüber und mit Hilfe von einem Radar vom Typ FM-CW mit einem VCO-Generator (1), der ein HF-Signal F erzeugt mit einer Ist-Frequenz f, wobei diese Frequenz von einem Modulator GDS (2) linear moduliert wird, wobei dieser Modulator eine sägezahnförmige Speisespannung DDS erzeugt, wobei sie beide eine Sägezahnperiode einer Dauer T haben, während der das Signal F einen linearen Frequenzgang eines vorbestimmten, konstanten, genau bekannten Wertes $\Delta F$ beschreibt, einer Sende-Empfangs-Antenne (3) und einer Mischstufe (4), die das ausgestrahlte Signal empfängt und das empfangene Signal F' mit einer Ist-Frequenz f' nach Reflexion an dem Gegenstand, dessen Abstand d gemessen werden soll und die ein Signal FB erzeugt mit einer Frequenz $f_b$, wobei das Verfahren dadurch gekennzeichnet ist, dass es die folgenden Stufen während der Dauer T einer Sägezahnperiode aufweist :

a) die genaue Messung der Frequenz $f_0$ des Signals F zu einem Zeitpunkt $f_0$ unter Verwendung einer Phasenschleife mit zwei Quarzoszillatoren (63, 65) und unter Verwendung von Kommutation- und Verriegelungsmitteln (82, 83) und der Phase $\varphi_{bo}$ entsprechend der Formel :

$$\varphi_{b0} = \frac{2\,\pi(\theta_2 - 2\,\theta_1)}{\theta_2 - \theta_1}$$

wobei die Dauern $\theta_1$ und $\theta_2$ durch Zählung mittels schneller Zähler bestimmt werden, wobei $\theta_1$ und $\theta_2$ das Ende der ersten und der zweiten Sinusoide des Signals Fb mit als Ausgang der Zeitpunkt $t_0$ ;

b) die Bestimmung einer Folge von N Perioden, wobei N eine ganze Zahl ist, des Signals Fb, von dem der Wert N und die Dauer $T_1$ gemessen wird, die in der Dauer T liegt,

c) die Berechnung eines annährenden Wertes von d, notiert als $d_1$ ausgehend von den Werten $\Delta F$, T und den Werten, die für N und $T_1$ in dem vorhergehenden Schritt gefunden wurden,

d) die annähernde Berechnung von $\varphi$, bezeichnet als $\varphi_1$, die die ungefähre Ausserphasigkeit der ausgestrahlten Signale und der empfangenen Signale ist, ausgehend von den Werten von $f_0$ und $d_1$, die in vorhergehenden Schritten gefunden wurden,

e) die Bestimmung des Winkels $2k\pi$, der in dem Winkel $\varphi$ vorhanden ist, wobei k der ganze Teil des Wertes :

$$\frac{f_0\,NT}{\Delta FT_1} - \frac{\varphi_{b0}}{2\,\pi}$$

unter der Bedingung, dass die Messgenauigkeit, ausgedrückt in Radianten des elektrischen Winkels, der die N Perioden des Signals Fb darstellen, kleiner ist als

$$\pi\,\frac{T_1}{T}\,\frac{\Delta F}{f_0};$$

f) die Identifizierung des genauen Wertes von $\varphi$ notiert als $\varphi_2$ bei der Summe $\varphi_{bo} + 2k\pi$,

g) die Berechnung des genauen Wertes von d, notiert als $d_2$, ausgehend von den Werten von $f_0$ und von $\varphi_2$, die in vorhergehenden Schritten gefunden wurden.

2. Verfahren zur genauen Bestimmung des Abstandes nach Anspruch 1 mit Hilfe eines Radars vom Typ FM-CW, wozu die Dauer T jedes Sägezahnes vorbestimmt, konstant und mit Genauigkeit bekannt ist.

3. Verfahren zur genauen Bestimmung des Abstandes nach Anspruch 1 mit Hilfe eines Radars vom Typ FM-CW mit einer Unterdrückungsschleife zwischen dem Ausgang der genannten Mischstufe (4) und dem Eingang des genannten Modulators (2) um die Frequenz $f_b$ des Ausgangssignals Fb der genannten Mischstufe nahezu konstant zu halten, dadurch gekennzeichnet, dass das Verfahren den zusätzlichen Schritt aufweist, der aus der genauen Messung der Dauer T des betreffenden Sägezahnes besteht.

4. Messvorrichtung zum Messen des Abstandes zum Durchführen des Verfahrens nach einem der Ansprüche 1 bis 3 vom Typ FM-CW mit einem VCO-Generator (1) für ein HF-Signal F mit der Ist-Frequenz f, das durch einen GDS-Modulator (2) frequenzmoduliert ist, wobei dieser Modulator ein Sägezahnsignal DDS erzeugt, wobei jeder Zahn eine Schräge darstellt mit der Dauer T, wobei während dieser Dauer das Signal F einen linearen Frequenzhub mit dem vorbestimmten Wert $\Delta F$ macht, der konstant und mit Genauigkeit bekannt ist, einer Sende-Empfangsantenne (3) und einer Mischstufe (4), die das ausgestrahlte Signal empfängt sowie das empfangene Signal F' mit der Ist-Frequenz f' nach Reflexion an dem Gegenstand, dessen Entfernung d man messen will, und die ein Signal Fb mit der Frequenz $f_b$ liefert, wobei die Anordnung ausserdem erste Mittel aufweist um das genannte Signal Fb in Form eines Rechtecksignals A mit derselben Phase und derselben Frequenz $f_b$ zu bilden, dadurch gekennzeichnet, dass die Anordnung ebenfalls die folgenden Elemente aufweist :

— zweite Messmittel zur Bestimmung der Phase $\varphi_{bo}$ des Rechtecksignals mit der Frequenz $f_b$ zu dem Zeitpunkt, der den Anfang der Dauer T angibt, wo die Frequenz f des Signals F einem vorbestimmten genauen Wert $f_p$ entspricht, mit einerseits einer Phasenschleife aus zwei Quarzoszillatoren (63, 65) und Kommutations- und Verriegelungsmittel (82, 83) zum Liefern des genannten Frequenzwertes $f_p$, andererseits mit schnellen Rechnern (24, 28) zum Messen der Dauern $\theta_1$ und $\theta_2$, die das Ende des ersten und der zweiten Sinusoide des Signals Fb angeben mit dem genannten Zeitpunkt, der das Ende der Dauer T angibt, als Ausgang ;

— dritte Messmittel zur Bestimmung der Frequenz $f_b$ einer Folge von Rechtecksignalen, die einem Signal A zugeordnet sind und deren Periodenzahl N (N eine beliebige ganze Zahl) und deren Dauer $T_1$ innerhalb der Dauer T mit Genauigkeit gemessen werden können, wobei die genannten dritten Mittel dazu eine Schwellenschaltung (14) aufweisen, die das Signal DDS und ein Schwellenspannungssignal S erhalten, logische Schaltungsanordnungen wie eine bistabile Triggerschaltung (25), die das Signal A erhält und logische Torschaltungen (17, 19) sowie Rechenschaltungen (18, 20) ;

— vierte Rechen- und Anzeigemittel (31 bis 36) zur genauen Bestimmung des Abstandes $d_2$ ausgehend von Werten der Parameter $\Delta F$, $\theta_1$, $\theta_2$, $f_p$, N, $T_1$ und T, die während einer (jeder) Schräge des Sägezahnes gemessen wurden unter Benutzung der nachfolgenden Formeln :

$$d_1 = \frac{cNT}{2\,\Delta F\,T_1}; \quad \varphi_{b0} = 2\,\pi\,\frac{\theta_2 - 2\,\theta_1}{\theta_2 - \theta_1};$$

k = ein ganzer Teil von

$$\frac{2\,f_p\,d_1}{c} - \frac{\varphi_{b0}}{2}; \quad d_2 = \frac{c}{4\,\pi f_p}\,(\varphi_{b0} + 2\,k\pi)$$

wobei $d_1$ ein Wert des genauen Abstandes ist und die Werte von $T_1$, T, $\Delta F$ und $f_p$ derart sind, dass die Messgenauigkeit, ausgedrückt in Radianten des elektrischen Winkels, der die N Perioden des Signals Fb darstellt, kleiner ist als

$$\pi\,\frac{T_1}{T}\,\frac{\Delta F}{f_p}\,.$$

5. Gerät zum Messen des Abstandes nach Anspruch 4, dadurch gekennzeichnet, dass es ausserdem Detektionsmittel aufweist zum Detektieren des Zeitpunktes $t_2$, wo das Signal F einen vorbestimmten konstanten Frequenzwert gleich $f_1 + f_q$ erreicht und zum Detektieren des Zeitpunktes $t_0$, wo das Signal F einen vorbestimmten konstanten Frequenzwert gleich $f_1 - f_q$ erreicht, wobei die genannten Detektionsmittel aus einer Frequenzmischstufe (61) bestehen, die an einem ersten Eingang mittels eines Kopplungselementes (62) mit dem Ausgang des VCO einen Bruchteil des Signals F erhält, einem ersten Quarzoszillator (63), der ein Signal mit der Frequenz $f_1$ an einem zweiten Eingang der genannten Frequenzmischstufe liefert, die ein Signal liefert, deren Frequenz gleich $|f - f_1|$ ist und einer Phasenvergleichsstufe (64), die an einem ersten Eingang das Signal mit der Frequenz $|f - f_1|$ und an einem zweiten Eingang ein konstantes von einem zweiten Quarzoszillator (65) geliefertes Signal mit der Frequenz $f_q$ erhält.

6. Gerät zum Messen des Abstandes, wobei jedem Sägezahn eine erste Stufe folgt bzw. dem eine zweite Stufe vorhergeht und zwar nach Anspruch 5, dadurch gekennzeichnet, dass das Gerät ausserdem einerseits eine Phasenschleife aufweist mit einer Reihenschaltung, ausgehend von dem Ausgang der genannten Phasenvergleichsschaltung, aus einem Verstärkerfilter (73), einem Analog-Digital-Wandler (74), einem Abzweigepunkt (75), der mit einem ersten Digital-Analog-Wandler (CNA) (77) verbunden ist mit einer nachfolgenden Vergleichsschaltung (81) und einem zweiten CNA (76) mit dem Modulator GDS, und andererseits Kommutations- und Verriegelungsmittel (82), die durch die logische Schaltung selbst aktiviert werden, die durch den Ausgang der genannten Vergleichsschaltung gesteuert wird und die Dauer $\gamma$ der genannten ersten Stufe und die Dauer $\delta$ der genannten zweiten Stufe bestimmt.

7. Gerät zum Messen des Abstandes nach Anspruch 6, dadurch gekennzeichnet, dass die genannte Phasenschleife zu dem Zeitpunkt $t_2$, der den Anfang der Dauer $\gamma$ der ersten Stufe bezeichnet, einen ersten Eingang der genannten Vergleichsschaltung anregt, die an einem zweiten Eingang das Ausgangssignal des genannten GDS erhält, das während $\gamma$ auf der Frequenz der ersten Stufe gehalten wird und zwar mittels der genannten Kommutations- und Verriegelungsmittel, wobei die Phasenschleife während der Dauer $\delta$ der zweiten Stufe einen ersten nichtinvertierenden Eingang eines in GDS vorgesehenen Operationsverstärkers anregt, dessen Ausgang während $\delta$ zu dem zweiten invertierenden Eingang (54) zurückgekoppelt wird.

8. Gerät zum Messen des Abstandes nach Anspruch 6, dadurch gekennzeichnet, dass die genannte Phasenschleife während der Dauer der ersten Stufe bzw. während der dauer δ der zweiten Stufe den ersten nich-invertierenden Eingang des genannten Operationsverstärkers anregt, dessen Ausgang während γ und δ zu dem zweiten invertierenden Eingang (54) zurückgekoppelt wird.

9. Gerät zum Messen des Abstandes nach Anspruch 5, dadurch gekennzeichnet, dass es ausserdem am Ausgang der genannten Phasenvergleichsstufe eine Reihenschaltung aus einem Amplitudendetektor und einer Signalformschaltung aufweist, die Impulse erzeugt, wenn die Frequenzen der Eingangssignale der Phasenvergleichsschaltung gleich sind, wobei die genannten Impulse einer digitalen Zählschaltung zugeführt werden, die mit einem Mikroprozessor verbunden ist, die mit grosser Genauigkeit den Auftritt der Zeitpunkte $t_0$ und $t_2$ und die Dauer T zwischen diesen zwei Zeitpunkten bestimmt.

10. Die Verwendung des Gerätes zum Messen des Abstandes zum Durchführen des Verfahrens nach einem der vorstehenden Ansprüche zum Messen des Pegels der freien Oberfläche (92) einer Flüssigkeit (93) in einem Behälter (94), dadurch gekennezichnet, dass der Ausgang des genannten VCO (91) mittels eines Wellenleiters (95) mit dem Boden des Behälters verbunden ist, wobei dieser Wellenleiter, von dem VCO zu dem Boden des Behälters gesehen, eine Reihenschaltung aufweist aus einem ersten Dämpfer (96), einer Diode zur Sendekopplung (97), einer Diode zur Empfangskopplung (97) sowie aus einem Heizwiderstand (101) der an der Aussenseite vorgesehen ist, einem zweiten Dämpfer (99), der dielektrischen Wand (100) eines Radarkuppels und nach dem Durchgang der oberen Wand des Behälters der freien Oberfläche der Flüssigkeit die als Reflektor für die radioelektrische Welle wirksam ist und in der Nähe des Bodens des Behälters einem Element (102), das zur Aufgabe hat, die Streureflexionen der Wellen an dem Boden des Behälters auszuschalten.

FIG.1

FIG.6

FIG.2

FIG.3

DDS

FIG.4a

FIG.4b

3

FIG.5